# FASCICULE DE BREVET EUROPEEN

(11) **EP 1 369 350 B1**
(45) Date de publication et mention de la délivrance du brevet: **09.03.2005**
(21) Numéro de dépôt: 03352013.1
(22) Date de dépôt: 28.05.2003
(51) Int. Cl.: B64D 11/06, A47C 9/06, A47C 1/031, B60N 2/30

(54) **Siège pour aéronef**
Flugzeugsitz
Aircraft seat

(30) Priorité: 05.06.2002 FR 0206887
(43) Date de publication de la demande: 10.12.2003
(73) Titulaire: Airbus, 31700 Blagnac (FR)
(72) Inventeur: Saint-Jalmes, Bruno, 31500 Toulouse (FR)
(74) Mandataire: Santarelli

(56) Documents cités:
- JP-A- 56 128 109
- US-A- 4 913 487
- PATENT ABSTRACTS OF JAPAN vol. 1995, no. 05, 30 juin 1995 (1995-06-30) -& JP 07 051141 A (AICHI KK), 28 février 1995 (1995-02-28)
- PATENT ABSTRACTS OF JAPAN vol. 1995, no. 02, 31 mars 1995 (1995-03-31) -& JP 06 319628 A (YAMAHA CORP), 22 novembre 1994 (1994-11-22)

## Description

La présente invention concerne un nouveau type de siège pour aéronef.

Le problème de l'espace dans un aéronef est un problème constant. Pour rentabiliser le vol d'un aéronef, on souhaite faire voyager le plus grand nombre possible de passagers à son bord. Pour chaque passager, il faut prévoir un siège. Le problème qui se pose est alors de disposer le plus grand nombre de sièges dans un espace donné, celui de la cabine de l'aéronef. Il faut aussi que, malgré tout, les passagers soient installés confortablement.

Des normes internationales de sécurité imposent un espace minimal à respecter pour chaque passager. Ainsi par exemple, il faut qu'en cas d'accident, si la tête d'un passager est projetée vers l'avant, elle ne puisse pas heurter le dossier du siège se trouvant devant elle, le passager étant bien entendu attaché par une ceinture de sécurité ventrale. Lorsque cette norme est juste respectée, on remarque qu'entre deux dossiers de sièges successifs, deux tiers de la distance séparant ces deux dossiers sont occupés par l'assise d'un siège et le tiers restant est disponible pour les jambes d'un passager assis et pour se déplacer, notamment pour accéder au siège.

L'espace pour se déplacer entre deux rangées de sièges, notamment en classe dite économique, ne permet généralement pas de se déplacer normalement et demande de se déplacer en faisant des pas sur le côté et en s'inclinant pour s'adapter à l'inclinaison des dossiers. Le document JP 56 - 128109 A présente un siège escamotable.

La présente invention a pour but de fournir un nouveau siège d'aéronef facilitant le déplacement des passagers entre deux rangées de sièges successives.

A cet effet, elle propose un siège d'aéronef comportant une assise et un dossier.

Selon l'invention, l'assise comporte une partie arrière se trouvant le long du dossier et une partie avant de forme complémentaire à la partie arrière pour former l'assise complète ; la partie arrière est mobile entre une position haute et une position basse ; des moyens de liaison relient la partie arrière à la partie avant de telle sorte que lorsque la partie arrière se trouve en position haute le long du dossier, la partie avant se trouve dans une position basse reculée dans laquelle elle se trouve au moins en partie sous la partie arrière et que lorsque la partie arrière se trouve dans sa position basse le long du dossier, la partie avant se trouve dans une position haute avancée à la hauteur de la partie arrière de manière à former avec celle-ci l'assise du siège pour recevoir un passager assis.

Un tel siège permet de laisser plus de place pour circuler lorsque la partie avant est escamotée sous la partie arrière de l'assise tout en offrant une assise confortable avec un bon soutien des cuisses lorsque la partie avant vient dans le prolongement de la partie arrière.

Dans une forme de réalisation avantageuse, des moyens élastiques rappelant la partie arrière de l'assise dans sa position haute sont prévus. Ces moyens permettent une utilisation "automatique" du siège, c'est-à-dire sans que le passager n'ait à se soucier de la position de l'assise.

Une forme de réalisation d'un siège selon l'invention prévoit que la partie arrière de l'assise est montée coulissante le long du dossier.

La partie avant passe de sa position basse reculée à sa position haute avancée par un mouvement qui est par exemple une combinaison d'une translation vers l'avant et d'une rotation. Il est toutefois aussi possible de prévoir simplement une translation ou bien une rotation.

Dans une forme d'exécution, la partie avant du siège est reliée à la partie arrière par au moins deux bielles formant un trapèze déformable et l'une de ces bielles est reliée par une troisième bielle à un point fixe.

Les parties avant et arrière de l'assise représentent de préférence chacune, lorsqu'elles sont à la même hauteur, sensiblement la moitié de la surface de l'assise.

Dans une forme de réalisation avantageuse, le siège comporte des moyens de verrouillage permettant de bloquer la partie arrière de l'assise dans sa position haute. Ce siège peut alors être utilisé pour recevoir un enfant, comme une chaise haute pour enfant.

Pour mieux résister à de fortes sollicitations, le siège comporte par exemple un renfort fixe disposé sensiblement verticalement sous le siège et la partie arrière présente un logement pour recevoir la partie supérieure du renfort lorsque celle-ci se trouve dans sa position basse. Ce renfort peut être constitué de deux tubes verticaux reliés entre eux par une barre transversale.

Des détails et avantages de la présente invention ressortiront mieux de la description qui suit faite en référence au dessin schématique annexé sur lequel :
La figure 1 est une vue de côté d'un siège selon l'invention "au repos",
La figure 2 est une vue de côté du siège de la figure 1 "en service",
Les figures 3A à 3C montrent schématiquement le passage de la position représentée sur la figure 1 à la position représentée sur la figure 2, et
La figure 4 est une vue de face partielle du siège tel que représenté sur la figure 1.

Le siège d'aéronef représenté sur ces figures comporte une assise réalisée en deux parties, un dossier 2 surmonté d'un repose tête 4 ainsi que des pieds 6.

Ce siège comporte deux pieds 6 supportant le dossier 2 et l'assise. Ces pieds se trouvent dans le prolongement du dossier 2. On peut par exemple prévoir que ce siège comporte deux poutres disposées sensiblement verticalement l'une face à l'autre. Ces poutres sont alors fixées à leur base sur le sol. La partie inférieure, près du sol, de ces poutres sert alors de piétement pour le siège tandis que la partie supérieure de ces poutres est utilisée pour la fixation du dossier 2.

Dans la description qui suit, on suppose que le siège représenté sur le dessin est fixé sur le sol 8 d'une cabine d'aéronef. On suppose alors que ce sol 8 est horizontal. Une flèche 10 indique le sens de déplacement de l'aéronef lorsque celui-ci est en vol et définit un axe longitudinal. Ainsi sur les figures l'avant se trouve sur la gauche tandis que l'arrière se trouve sur la droite.

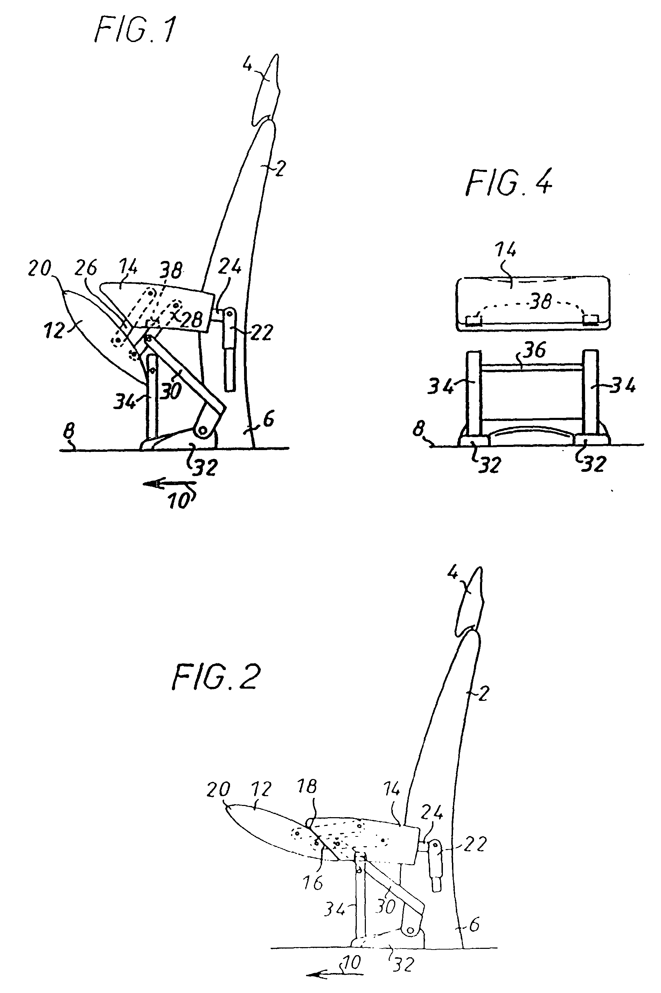

L'assise du siège comporte une partie avant 12 et une partie arrière 14. Ces deux parties 12 et 14 sont de formes complémentaires pour former une assise complète comme représenté sur la figure 2. La surface de jonction entre les parties avant 12 et arrière 14 de l'assise est sensiblement plane. Ce plan de jonction 16 est incliné à environ 45°. Il s'étend de bas en haut et d'arrière en avant et forme sur l'assise du siège une ligne de jonction 18 sensiblement parallèle au dossier 2. La distance séparant la ligne de jonction 18 du dossier 2 est sensiblement égale à la distance séparant cette ligne de jonction 18 du nez 20 de l'assise, le nez 20 étant la partie la plus en avant de l'assise.

Comme on peut le remarquer sur les figures, les parties avant 12 et arrière 14 sont mobiles, d'une part l'une par rapport à l'autre et d'autre part par rapport au dossier 2 fixe.

La partie arrière 14 peut se déplacer en translation sensiblement verticale le long de la partie inférieure du dossier 2. Sur chaque côté du siège, au niveau de la partie supérieure des pieds 6, se trouve un vérin pneumatique 22. Chaque vérin 22 est fixé à son extrémité basse au pied 6 correspondant et à son autre extrémité à une patte d'accrochage 24 solidaire de la partie arrière 14 de l'assise. Le guidage de la partie arrière 14 sur le dossier 2 peut se faire par exemple par concordance de formes entre la partie arrière 14 et le dossier 2. On peut également prévoir sur la partie arrière 14 des doigts de guidage coulissant chacun dans une rainure correspondante réalisée par exemple dans les poutres formant les pieds 6 et supportant le dossier 2.

La partie avant 12 est reliée à la partie arrière 14 de l'assise par au moins un jeu de bielles. Il est possible de prévoir un seul jeu de bielles situé sensiblement dans le plan longitudinal médian du siège ou bien de prévoir deux jeux de bielles placés symétriquement par rapport à ce plan longitudinal médian. Dans ce dernier cas, ces bielles se trouvent alors par exemple sur les côtés du siège mais sont alors de préférence carénées pour éviter tout coincement de doigt ou d'objet. D'autres solutions sont aussi envisageables. On préférera toutefois des configurations dans lesquelles le siège est sensiblement symétrique par rapport à son plan longitudinal médian. Dans la suite de la description, seul un jeu de bielles est décrit.

Ainsi, la partie avant 12 est reliée à la partie arrière 14 par une bielle supérieure 26 et une bielle inférieure 28. Ces bielles 26 et 28 sont disposées toutes les deux dans un plan vertical longitudinal et définissent un trapèze. Une première extrémité de chaque bielle est montée pivotante sur la partie arrière 14 de l'assise tandis que l'autre extrémité de chaque bielle est montée pivotante sur la partie avant 12 de l'assise. Les points d'attache de la bielle supérieure 24 sur la partie arrière 14 et la partie avant 12 respectivement se trouvent à une altitude supérieure aux points d'attache de la bielle inférieure 28 sur la partie arrière 14 et la partie avant 12 respectivement.

Ainsi, le mouvement relatif entre la partie arrière 14 et la partie avant 12 est une combinaison d'une translation et d'une rotation. Comme on le remarque sur les figures 1 et 2, en position d'utilisation (figure 2) la partie avant 12 est disposée presque à l'horizontale à l'avant de la partie arrière 14 et en position "de repos" (figure 1), la partie avant 12 est en position reculée par rapport à la partie arrière 14 et se trouve, au moins en partie, sous celle-ci.

Les longueurs des bielles et les positions des points d'attache sont étudiées de telle sorte que, dans une première position, la partie avant 12 vienne coopérer avec la partie arrière 14 pour former une assise de siège tandis qu'en position de repos la partie avant 12 est escamotée au moins partiellement sous la partie arrière 14.

On remarque sur les figures que la bielle inférieure 28 est reliée par une troisième bielle 30 à un socle 32. Cette liaison au sol permet de coupler le mouvement de la partie arrière 14 par rapport au dossier 2 avec le mouvement relatif des parties avant 12 et arrière 14 de l'assise.

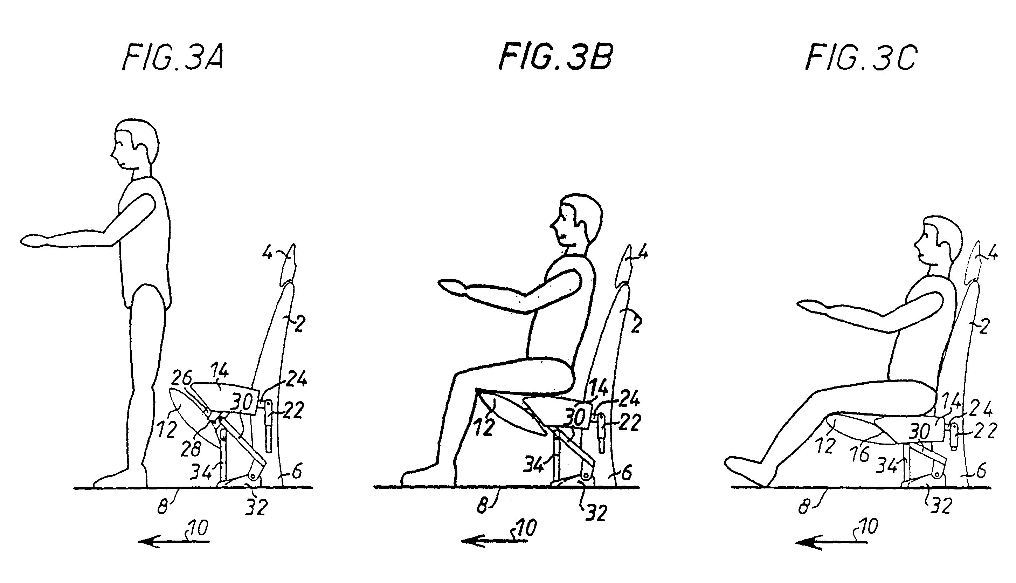

Ce socle 32 porte en outre un renfort formé par deux tubes 34 verticaux reliés entre eux par une barre 36 transversale. La figure 4 montre ce renfort en vue de face. On remarque sur cette figure 4 et sur la figure 1 que la partie arrière 14 de l'assise présente deux logements 38 faisant face à l'extrémité libre supérieure des tubes 34. Ces logements 38 sont réalisés dans la structure de la partie arrière 14 de l'assise. Les tubes 34 sont disposés de façon assez reculée pour ne pas gêner le mouvement de la partie avant 12 de l'assise. Leur hauteur est telle que lorsque la partie arrière 14 est dans sa position la plus basse (figures 2 et 3C), les extrémités libres des tubes 34 viennent se placer dans les logements 38.

Le fonctionnement du siège est décrit ci-après en référence aux figures 3A à 3C.

Sur la figure 3A, le siège est en position de repos et un passager s'apprête à s'asseoir sur celui-ci. La partie arrière 14 de l'assise se trouve dans sa position la plus haute. Cette position peut être limitée de plusieurs manières : butée sur le dossier et/ou de l'assise, fin de course des vérins 22, etc.... La partie avant 12 de l'assise se trouve en position escamotée sous la partie arrière 14. Cette position est définie par la longueur des bielles 26, 28 et 30 et par la position des points d'attache de ces bielles. Les vérins pneumatiques 22 exercent sur la partie arrière 14 de l'assise une force élastique de rappel dans cette position haute de la partie arrière 14. La partie avant 12 de l'assise peut ici venir contre les tubes 34 du renfort placé sous le siège. Ce renfort peut éventuellement être utilisé pour limiter le mouvement des parties 12 et 14 de l'assise et former ainsi la butée définissant la position haute de la partie arrière 14 et la position reculée de la partie inférieure 12.

Lorsque le passager commence à s'asseoir (figure 3B) il vient tout d'abord au contact de la partie arrière 14. Sous l'effet du poids du passager, une force est exercée à l'encontre de la force exercée par les vérins pneumatiques 22 et la partie arrière 14 de l'assise descend. De par la présence de la troisième bielle 30, la bielle inférieure 28 est poussée vers le haut entraînant ainsi la partie avant 12 de l'assise. Cette partie avant 12 vient alors se déplacer vers l'avant et se coucher pour venir se mettre quasiment à l'horizontale. Les vérins pneumatiques 22 amortissent la descente du passager.

Lorsque le passager est entièrement assis (figure 3C), son poids s'exerce principalement sur la partie arrière 14 de l'assise. La partie arrière 14 se trouve alors dans sa position la plus basse. Cette position peut être définie de plusieurs manières. On peut prévoir par exemple des butées limitant le mouvement de translation de l'assise 14 vers le bas. Ces butées peuvent être intégrées aux vérins pneumatiques 22 et/ou au dossier 2 et/ou aux pieds 6 et/ou à la partie arrière 14. Il est également possible de prévoir que cette butée est obtenue lorsque la partie avant 12 est en position par rapport à la partie arrière 14 pour former une assise complète. Cette butée peut ici aussi être réalisée par le renfort disposé sous le siège, lorsque les tubes 34 viennent en butée au fond des logements 38 correspondants.

Dans cette position (figure 3C), le renfort placé sous le siège aide ce dernier à encaisser des efforts importants. La borne transversale 36, en reliant les deux tubes 34, permet aussi d'augmenter la résistance du siège lors de sollicitations latérales. Ainsi des accélérations longitudinales de 16G et transversales de 7G peuvent être encaissées par le siège (1G = 9,81 ms⁻²).

Dans une variante de réalisation, on peut prévoir des moyens de verrouillage pour bloquer le siège dans sa position de repos (fig. 1 et 3A), dans laquelle la partie arrière 14 de l'assise est en position haute et la partie avant 12 escamotée sous la partie arrière 14. Ces moyens de verrouillage peuvent être multiples. Ils peuvent par exemple être intégrés aux vérins pneumatiques 22 pour empêcher une descente de la partie arrière 14. Il peut s'agir aussi d'un verrou empêchant la partie arrière 14 de l'assise de descendre. La bielle 30 peut également être bloquée. Dans ce dernier cas, les moyens de verrouillage seront avantageusement munis de moyens de commande actionnables au pied.

Le fait de bloquer le siège dans sa position de repos permet de se servir du siège pour un enfant. Celui-ci est assis alors uniquement sur la partie arrière 14. Il se trouve donc en position haute. De plus, la longueur de l'assise est alors adaptée à la taille de l'enfant. Ainsi de jeunes passagers peuvent voyager dans de bien meilleures conditions de confort qu'avec des sièges classiques.

Le siège selon l'invention présente pour le passager le même confort qu'un siège classique d'aéronef. Lorsqu'il est assis, on peut prévoir une longueur entre le nez 20 de l'assise et le dossier 2 identique à celle d'un siège classique. Le passager bénéficie donc d'un soutien équivalent pour ses cuisses. Lorsqu'il n'est pas assis, le passager dispose de plus de place pour se mouvoir, pour retirer un vêtement par exemple ou placer un bagage dans un coffre à bagage, etc....

Lorsque l'espace entre deux sièges successifs est trop restreint, des problèmes de thrombose peuvent se poser sur les vols long courrier. Le passager assis sur le siège manque de place pour se mouvoir et sa circulation sanguine ne s'effectue pas correctement. Une thrombose peut alors survenir. Un siège selon l'invention peut participer à résoudre ces problèmes. En effet, le passager dispose d'un espace plus important lorsqu'il se lève. Il peut alors bouger, par exemple s'accroupir, sans déranger ses voisins. Cet exercice favorise la circulation sanguine et évite la thrombose.

Lorsqu'il s'assied ou se lève, le mouvement de l'assise ne gêne pas le passager. Il n'a besoin d'effectuer aucun geste particulier pour que l'assise vienne se positionner correctement. On ne retrouve pas l'inconvénient des sièges rabattables classiques sur lesquels l'assise tout entière pivote de sa position d'utilisation sensiblement horizontale vers une position de repos sensiblement verticale le long du dossier. En effet, pour ces sièges, il convient d'initier avec la main le mouvement de l'assise vers sa position horizontale avant de pouvoir s'asseoir.

Le siège selon l'invention présente l'avantage d'assister l'assise du passager. En effet le passager vient plus rapidement au contact du siège et la dernière phase de descente est amortie, notamment lorsque le siège comporte des moyens élastiques.

Le siège selon l'invention peut également recevoir, comme généralement les sièges d'aéronef, un gilet de sauvetage. Le mécanisme du siège est en effet peu volumineux et laisse un espace libre important sous le siège, tant en position de repos qu'en position d'utilisation. Cet espace libre peut être également utilisé pour le confort des passagers et peut recevoir les pieds du passager assis sur le siège ou les pieds d'un passager assis derrière.

Grâce au plus grand espace libre pour se déplacer entre deux rangées de sièges, lorsque ces sièges ne sont pas occupés, les temps d'embarquement et de débarquement peuvent être réduits. Les passagers circulent mieux et donc plus rapidement.

De plus, le service du personnel navigant commercial, ou des passagers, peut être facilité dans le cas notamment où l'aéronef présente au moins deux couloirs. Si l'un de ces couloirs est momentanément encombré et qu'à proximité une rangée de sièges entre deux couloirs est libre, le passage d'un couloir à l'autre s'effectue facilement, même avec un trolley (ou chariot).

La présente invention peut s'appliquer à des sièges de toutes formes. Le mécanisme décrit ci-dessus peut s'adapter sur quasiment tous les sièges. Dans un souci de simplification, aucun accoudoir n'a été représenté sur le dessin. Toutefois, on peut prévoir de tels accoudoirs qui sont soit solidaires de l'assise, de préférence la partie arrière de celle-ci, soit du dossier (ou des pieds).

La présente invention ne se limite pas à la forme de réalisation préférentielle décrite ci-dessus à titre d'exemple non limitatif. Elle concerne au contraire toutes les variantes de réalisation dans le cadre des revendications ci-après.

Ainsi par exemple d'autres cinématiques pourraient être imaginées entre la partie arrière et la partie avant de l'assise. Les bielles inférieures et supérieures pourraient par exemple former un parallélogramme. Dans ce cas, le mouvement relatif entre les deux parties de l'assise serait un mouvement uniquement de translation. On peut également ne prévoir qu'une seule bielle entre les deux parties de l'assise du siège. D'autres mécanismes avec un point de renvoi, comme dans une balance, peuvent être envisagés.

Le mouvement de la partie avant étant lié au mouvement de la partie arrière de l'assise, les forces de rappel élastiques peuvent s'exercer également sur la partie avant de l'assise ou bien sur le mécanisme de liaison entre ces deux parties d'assise pour rappeler la partie arrière dans sa position haute. Ces moyens de rappel élastiques sont optionnels. On comprendra aisément que des moyens de rappel dans la position de repos sont avantageux. Au lieu de prévoir des moyens élastiques (vérins pneumatiques, ressorts, etc...) d'autres moyens peuvent aussi être envisagés (balourd, contrepoids, etc...)

## Revendications

1. Siège d'aéronef comportant une assise et un dossier (2), dans lequel
l'assise comporte une partie arrière (14) se trouvant le long du dossier (2) et une partie avant (12) de forme complémentaire à la partie arrière (14) pour former l'assise complète,
**caracterisé en ce que** la partie arrière (14) est mobile entre une position haute et une position basse,
et **en ce que** des moyens de liaison (26, 28) relient la partie avant (12) à la partie arrière (14) de telle sorte que lorsque la partie arrière (14) se trouve en position haute le long du dossier (2), la partie avant (12) se trouve dans une position basse reculée dans laquelle elle se trouve au moins en partie sous la partie arrière (14) et que lorsque la partie arrière (14) se trouve dans sa position basse le long du dossier (2), la partie avant (12) se trouve dans une position haute avancée à la hauteur de la partie arrière (14) de manière à former avec celle-ci l'assise du siège pour recevoir un passager assis.

2. Siège d'aéronef selon la revendication 1, **caractérisé en ce que** des moyens élastiques (22) rappelant la partie arrière (14) de l'assise dans sa position haute sont prévus.

3. Siège d'aéronef selon l'une des revendications 1 ou 2, **caractérisé en ce que** la partie arrière (14) de l'assise est montée coulissante le long du dossier (2).

4. Siège d'aéronef selon l'une des revendications 1 à 3, **caractérisé en ce que** la partie avant (12) passe de sa position basse reculée à sa position haute avancée par un mouvement qui est une combinaison d'une translation vers l'avant et d'une rotation.

5. Siège d'aéronef selon l'une des revendications 1 à 4, **caractérisé en ce que** la partie avant (12) du siège est reliée à la partie arrière (14) par au moins deux bielles (26, 28) formant un trapèze déformable et **en ce qu'**une (28) de ces bielles est reliée par une troisième bielle (30) à un point fixe (32).

6. Siège d'aéronef selon l'une des revendications 1 à 5, **caractérisé en ce que** les parties avant (12) et arrière (14) de l'assise représentent chacune, lorsqu'elles sont à la même hauteur, sensiblement la moitié de la surface de l'assise.

7. Siège d'aéronef selon l'une des revendications 1 à 6 **caractérisé en ce qu'**il comporte des moyens de verrouillage permettant de bloquer la partie arrière (14) dans la position haute.

8. Siège d'aéronef selon l'une des revendications 1 à 7, **caractérisé en ce qu'**il comporte un renfort fixe disposé sensiblement verticalement sous le siège et **en ce que** la partie arrière (14) présente un logement (38) pour recevoir la partie supérieure du renfort lorsque celle-ci (14) se trouve dans sa position basse.

9. Siège d'aéronef selon la revendication 8, **caractérisé en ce que** le renfort est constitué de deux tubes (34) verticaux reliés entre eux par une barre (36) transversale.

## Patentansprüche

1. Luftfahrzeugsitz, der eine Sitzfläche und eine Rückenlehne (2) umfasst, wobei die Sitzfläche einen sich entlang der Rückenlehne (2) befindenden hinteren Teil (14) aufweist und einen vorderen Teil (12), der eine zu dem hinteren Teil (14) komplementäre Form besitzt, um die vollständige Sitzfläche zu bilden,
**dadurch gekennzeichnet,**
**dass** der vordere Teil (14) beweglich ist zwischen einer hohen und einer niedrigen Position, und
**dass** Verbindungsmittel (26, 28) den vorderen Teil (12) so mit dem hinteren Teil (14) verbinden, dass, wenn der hintere Teil (14) sich in der hohen Position entlang der Rückenlehne (2) befindet, der vordere Teil (12) sich in einer niedrigen zurückgezogenen Position befindet, in der er sich zumindest teilweise unter dem hinteren Teil (14) befindet, und dass, wenn der hintere Teil (14) sich in seiner niedrigen Position entlang der Rückenlehne (2) befindet, der vordere Teil (12) sich in einer vorstehenden hohen Position auf der Höhe des hinteren Teils (14) befindet, so dass er mit diesem die Sitzfläche des Sitzes bildet, um einen sitzenden Passagier aufzunehmen.

2. Luftfahrzeugsitz nach Anspruch 1,
**dadurch gekennzeichnet,**
**dass** elastische Mittel (22) vorgesehen sind, welche den hinteren Teil (14) der Sitzfläche in seine hohe Position zurückziehen.

3. Luftfahrzeugsitz nach einem der Ansprüche 1 oder 2,
**dadurch gekennzeichnet,**
**dass** der hintere Teil (14) der Sitzfläche verschiebbar entlang der Rückenlehne (2) angebracht ist.

4. Luftfahrzeugsitz nach einem der Ansprüche 1 bis 3,
**dadurch gekennzeichnet,**
**dass** der vordere Teil (12) sich mittels einer Bewegung, die eine Kombination aus einer Verschiebung nach vorne und einer Drehung ist, von seiner niedrigen zurückgezogenen Position in seine hohe vorstehende Position bewegt.

5. Luftfahrzeugsitz nach einem der Ansprüche 1 bis 4,
**dadurch gekennzeichnet,**
**dass** der vordere Teil (12) des Sitzes mit dem hinteren Teil (14) über zumindest zwei Glieder (26, 28) verbunden ist, welche ein verformbares Trapez bilden, und dass eines (28) dieser Glieder über ein drittes Glied (30) mit einem ortsfesten Punkt (32) verbunden ist.

6. Luftfahrzeugsitz nach einem der Ansprüche 1 bis 5,
**dadurch gekennzeichnet,**
**dass** der vordere Teil (12) und der hintere Teil (14) der Sitzfläche, wenn sie sich auf gleicher Höhe befinden, jeweils im Wesentlichen die Hälfte der Oberfläche der Sitzfläche darstellen.

7. Luftfahrzeugsitz nach einem der Ansprüche 1 bis 6,
**dadurch gekennzeichnet,**
**dass** er Verriegelungsmittel aufweist, welche es ermöglichen, den hinteren Teil (14) in seiner hohen Position zu blockieren.

8. Luftfahrzeugsitz nach einem der Ansprüche 1 bis 7,
**dadurch gekennzeichnet,**
**dass** er eine feststehende Verstärkung aufweist, welche im Wesentlichen vertikal unter dem Sitz angebracht ist, und dass der hintere Teil (14) eine Aufnahme (38) aufweist, um den oberen Teil der Verstärkung aufzunehmen, wenn dieser (14) sich in der niedrigen Position befindet.

9. Luftfahrzeugsitz nach Anspruch 8,
**dadurch gekennzeichnet,**
**dass** die Verstärkung aus zwei vertikalen Rohren (34) besteht, welche untereinander über eine Querstange (36) verbunden sind.

## Claims

1. An aircraft seat including a seat rest and a backrest (2), in which the seat rest has a rear portion (14) along the backrest (2) and a front portion (12) of complementary shape to the rear portion (14) so as to form a complete seat rest,
**characterized in that** the rear portion (14) is mobile between a raised position and a lowered position,
and **in that** coupling means (26, 28) connect the front portion (12) to the rear portion (14) so that when the rear portion (14) is in the raised position along the backrest (2), the front portion (12) is in a retracted lowered position in which at least part of it is under the rear portion (14) and that when the rear portion (14) is in its lowered position along the backrest (2), the front portion (12) is in an advanced raised position at the same height as the rear portion (14) to form therewith the seat rest of the seat for receiving a seated passenger.

2. The aircraft seat claimed in claim 1 **characterized in that** elastic means (22) are provided urging the rear portion (14) of the seat rest into its raised position.

3. The aircraft seat claimed in one of claims 1 or 2, **characterized in that** the rear portion (14) of the seat rest is mounted so as to slide along the backrest (2).

4. The aircraft seat claimed in one of claims 1 to 3, **characterized in that** the movement of the front portion (12) from its retracted lowered position to its advanced raised position is a combination of a movement in translation toward the front and a rotation.

5. The aircraft seat claimed in one of in claims 1 to 4, **characterized in that** the front portion (12) of the seat is connected to the rear portion (14) by at least two links (26, 28) forming a trapezial four-bar linkage and **in that** one (28) of said links is connected by a third link (30) to a fixed point (32).

6. The aircraft seat claimed in one of claims 1 to 5, **characterized in that** the front (12) and rear (14) portions of the seat rest each account for substantially half the surface area of the seat rest when they are at the same height.

7. The aircraft seat claimed in one of claims 1 to 6, **characterized in that** it includes locking means for locking the rear portion (14) in the raised position.

8. The aircraft seat claimed in one of claims 1 to 7, **characterized in that** it includes a fixed reinforcement disposed substantially vertically under the seat and **in that** the rear portion (14) includes a housing (38) for receiving the upper portion of the reinforcement when the rear portion (14) is in its lowered position.

9. The aircraft seat claimed in claim 8, **characterized in that** the reinforcement comprises two vertical tubes (34) linked by a transverse bar (36).
